# EUROPEAN PATENT SPECIFICATION

(11) **EP 3 649 394 B1**
(45) Date of publication and mention of the grant of the patent: **19.11.2025**
(21) Application number: 18828586.0
(22) Date of filing: 04.07.2018
(51) Int. Cl.: F17C 5/04, B67D 7/02, F17C 5/06

(54) **HYDROGEN REFUELLING STATION COMPRISING A FILL TANK**
WASSERSTOFFBETANKUNGSSTATION MIT EINEM FÜLLTANK
STATION DE RAVITAILLEMENT EN HYDROGÈNE COMPRENANT UN RÉSERVOIR DE REMPLISSAGE

(30) Priority: 07.07.2017 SE 1750894
(43) Date of publication of application: 13.05.2020
(73) Proprietor: Oazer Hydrogen Electric AB, 906 20 Umeå (SE)
(72) Inventor: WESTERLUND, Boh, 913 42 Obbola (SE)
(74) Representative: Zacco Sweden AB
(86) International application number: PCT/SE2018/050730
(87) International publication number: WO 2019/009794

(56) References cited:
- CA-A1- 2 999 130
- DE-A1- 10 201 273
- US-A1- 2003 083 848
- US-A1- 2009 151 812
- US-A1- 2012 130 549
- US-A1- 2012 159 970
- US-A1- 2012 216 915
- US-A1- 2013 014 855
- US-A1- 2013 014 855
- US-A1- 2014 263 401
- US-A1- 2014 332 114
- US-A1- 2014 352 840
- US-A1- 2016 265 720
- US-A1- 2017 138 539

## Description

### TECHNICAL FIELD

The present invention relates to hydrogen refuelling stations. The present invention further relates to methods of refuelling a vehicle fuel tank with hydrogen gas from a hydrogen refuelling station, as well as to a heat recovery system for a hydrogen refuelling station.

### BACKGROUND ART

In order to reduce pollution and carbon dioxide emissions from vehicles, automobile manufacturers are increasingly turning towards zero-emissions technologies such as battery electric vehicles and fuel-cell electric vehicles.

Among zero-emissions technologies, hydrogen fuel vehicles are attracting increasing attention from the automotive industry, due in part to the fact that hydrogen fuel vehicles may be fuelled in similar timescales to fossil-fuelled vehicles and have similar driving ranges for all vehicle segments.

In order for hydrogen vehicles to gain widespread popularity a hydrogen refuelling infrastructure must be in place to allow refuelling of such vehicles. However, current hydrogen refuelling stations are expensive, leading to a reluctance to install such stations without a sufficient pre-existing customer base to motivate the investment. This leads to a catch 22-like situation whereby investment is delayed in the hydrogen fleet due to the lack of refuelling infrastructure, and investment is delayed in the refuelling infrastructure due to lack of a hydrogen fleet. In urban areas, this catch 22-like situation may be overcome due to the fact that a single well-placed refuelling station has a large potential future customer base. However, in rural areas the realisation of a transition to zero-emissions vehicles may be retarded by the lack of viable solutions to this problem.

JP2003130295 discloses hydrogen station filling management device capable of smoothly filling a hydrogen vehicle with hydrogen even with a small scale hydrogen station. In this way, the invention contributes to the promotion of diffusion of hydrogen vehicles preferable for the global environment.

US 2014/332114 A1 discloses a gas-filling device that includes a compressor and a pressure accumulator. The design pressure of a pressure accumulator can be reduced while downsizing the compressor. In advance, a relationship between a filling pressure and a target flow rate is determined in accordance with the volume of a tank, the filling pressure is detected, and the target flow rate is determined. A flow rate of a gas to be supplied into the tank is controlled according to the target flow rate. In a case where the target flow rate is equal to or less than a maximum discharge flow rate of the compressor, the gas is supplied to the tank only from the compressor. In a case where the target flow rate is greater than the maximum discharge flow rate, the gas is supplied to the tank from the compressor and the pressure accumulator.

There remains a need for new technologies enabling the widespread roll-out of hydrogen vehicles.

### SUMMARY OF THE INVENTION

The inventor of the present invention has identified a number of shortcomings in known hydrogen refuelling stations. Typical hydrogen refuelling stations are designed to meet SAE standards such as J2601 (hydrogen fuelling) and J2799 (IR communication). Such stations typically enable numerous vehicles to be refuelled per day, in a running pace, and specify short filling times such as 3-4 minutes under reference conditions. In order to enable such high throughputs and filling rates, the hydrogen refuelling stations are equipped with powerful heat exchangers and complex control systems to ensure that the vehicle hydrogen tank is not overfilled and does not overheat during filling. Such refuelling stations are however over-dimensioned for the initial roll-out phase of introducing hydrogen vehicles to the fleet, especially for rural areas.

The inventor of the present invention has realised that a cheaper hydrogen refuelling station with the capacity to fill at least a few vehicles per day at a reasonable filling rate is desirable in order to facilitate the roll-out of a widespread hydrogen vehicle filling infrastructure and in such a manner facilitate the widespread roll-out of hydrogen vehicles.

It is thus an object of the present invention to provide hydrogen refuelling stations that are cheaper and simpler to construct.

These objects are achieved by a hydrogen refuelling station according to the appended claims. Such a hydrogen refuelling station comprises:
a source of hydrogen gas arranged to provide hydrogen gas at a source pressure;
a first pressure storage tank arranged to store hydrogen gas at a first pressure;
one or more compressors adapted to compress and convey the hydrogen gas from the source of hydrogen gas at source pressure to the first pressure storage tank;
a control unit; and
a dispensing system adapted to dispense the hydrogen gas to a vehicle fuel tank.

The hydrogen refuelling station further comprises a fill tank having an internal volume smaller than an internal volume of the first pressure storage tank, wherein the fill tank is adapted to be arranged in fluid communication with the first pressure storage tank and is adapted to provide the dispensing system with hydrogen gas.

The control unit may be adapted to receive information regarding a fuel requirement of a vehicle fuel tank, and may be adapted to control the transfer of a quantity of hydrogen gas between the first pressure storage tank and the fill tank based upon the information received regarding a fuel requirement of a vehicle fuel tank. Preferably, the control unit is adapted to receive information regarding a fuel requirement of a vehicle fuel tank prior to the arrival of the vehicle at the hydrogen refuelling station, for example using long-range wireless means.

This allows the fill tank to be provided with an appropriate quantity of hydrogen that is sufficient to be able to fill a vehicle fuel tank to a predetermined level. A suitable predetermined level may for example be over 90% state of charge (SOC), such as 95% SOC. This may assist in reducing the pressure difference between the fill tank and vehicle fuel tank, thus improving the control of the hydrogen transfer between the hydrogen station and the vehicle fuel tank, reducing the amount of heat developed during filling and helping to avoid the risk of filling the vehicle fuel tank above the maximum permissible pressure. By providing the hydrogen refuelling station with a fill tank that is smaller in volume than the high pressure storage tank a number of advantages are obtained. Hydrogen may be transferred to the fill tank in advance, allowing the hydrogen in the fill tank to be easily pre-conditioned by for example cooling prior to filling of the vehicle fuel tank. By using a smaller tank for filling to the vehicle fuel tank, the pressure difference between the fill tank and vehicle fuel tank will reduce faster, leading to a rate of filling that is more easily controlled and reducing the risk of overfilling of the vehicle fuel tank.

The first pressure storage tank may be a high pressure storage tank or an intermediate pressure storage tank. In such a case, the control unit may be adapted to control the transfer of a quantity of hydrogen gas from the first pressure storage tank to the fill tank based upon the information received regarding a fuel requirement of a vehicle fuel tank. That is to say that the fill tank is filled to an appropriate quantity from a high pressure storage tank or an intermediate pressure storage tank. By filling the fill tank only when the appropriate quantity required is already known, system losses such as compression losses and transfer losses may be reduced.

The first pressure storage tank may be an intermediate pressure storage tank or a medium pressure storage tank. In such as case, the control unit may be adapted to control the transfer of a quantity of hydrogen gas from the fill tank to the first pressure storage tank based upon the information received regarding a fuel requirement of a vehicle fuel tank. That is to say that the quantity of hydrogen in the fill tank is reduced to an appropriate quantity by venting hydrogen to an intermediate pressure storage tank or medium pressure storage tank. By controlling the quantity of hydrogen in the fill tank by venting, the entire contents of the fill tank may be cooled long in advance of any need for fuelling a vehicle, allowing cooling to be performed at a slower rate, potentially reducing the maximum required cooling power and making cooling more energy efficient.

The two means of controlling the transfer of hydrogen gas between the fill tank and one or more storage tanks may also be combined. Thus, the control unit may be adapted to control the transfer of a quantity of hydrogen gas from the first pressure storage tank to the fill tank based upon the information received regarding a fuel requirement of a vehicle fuel tank, and may be adapted to control the transfer of a quantity of hydrogen gas from the fill tank to a second pressure storage tank based upon the information received regarding a fuel requirement of a vehicle fuel tank, wherein the first and second pressure storage tanks may be the same or different. For example, the first pressure storage tank may be a high pressure storage tank and the second pressure storage tank may then be an intermediate or medium pressure storage tank. Alternatively the first and second pressure storage tanks may be the same and be an intermediate pressure storage tank.

Whenever the first pressure storage tank is an intermediate pressure tank a compressor may be used to transfer hydrogen gas from the intermediate pressure tank to the fill tank. This ensures that energy is expended compressing hydrogen to high pressure only as required.

The source of hydrogen gas may be an electrolyser, a reformer, a filled cryogenic hydrogen container, or a filled gaseous hydrogen container. The source of hydrogen is preferably an electrolyser, since this allows the production of hydrogen from renewable sources, on-site. The source pressure may be a pressure of from 1 to 100 Bar. This is a typical pressure for hydrogen produced by for example electrolysis.

The hydrogen refuelling station may comprise a low pressure storage tank, preferably arranged to store hydrogen gas at a pressure of from 1 to 100 Bar. The hydrogen refuelling station may comprise a medium pressure storage tank, preferably arranged to store hydrogen gas at a pressure of from 200 to 300 Bar. The hydrogen refuelling station may comprise an intermediate pressure storage tank preferably arranged to store hydrogen gas at a pressure of from 400 to 600 Bar. The hydrogen refuelling station may comprise a high pressure storage tank preferably arranged to store hydrogen gas at a pressure of 700 Bar or higher, such as from 700 to 1000 Bar.

The medium pressure storage tank and/or the intermediate pressure storage tank may be adapted to provide the dispensing system with hydrogen gas. This permits sequential filling of the vehicle fuel tank, facilitating simple filling of the tank.

The hydrogen refuelling station may comprise a single compressor adapted to sequentially compress and convey the hydrogen gas from the source of hydrogen gas at source pressure to the first pressure storage tank, optionally via one or more of the low pressure storage tank, the medium pressure storage tank and the intermediate pressure storage tank. Using a single compressor may further reduce the total cost of producing and operating the hydrogen refuelling station.

The hydrogen refuelling station may comprise multiple compressors adapted to sequentially compress and convey the hydrogen gas from the source of hydrogen gas at source pressure to the first pressure storage tank, optionally via one or more of the low pressure storage tank, the medium pressure storage tank and the intermediate pressure storage tank. This ensures quick and robust compression of the hydrogen produced at source to a pressure suitable for use in refuelling vehicle fuel tanks.

The hydrogen refuelling station further comprises a cooling system arranged to cool the fill tank and optionally one or more of the low pressure storage tank, the medium pressure storage tank, the intermediate pressure storage tank, and the high pressure storage tank. This means that hydrogen may be cooled at an appropriate rate to an appropriate temperature prior to fuelling the vehicle fuel tank, reducing the need for expensive, complex "on the fly" cooling systems. This may be especially advantageous in circumstances where abundant, low-grade cooling is available, such as in cold climate zones. The cooling system may comprise a heat exchanger. This permits the reuse of waste heat from the hydrogen in other processes at the hydrogen refuelling station, such as for assisting in heating the electrolyser to a desired operating temperature, or for operating a thermal hydrogen compressor using the waste heat.

According to a further aspect of the present invention, a hydrogen refuelling station comprising a heat recovery system is provided. The heat recovery system comprises a cooling circuit, wherein the cooling circuit comprises a cooling medium arranged to be circulated in the cooling circuit, a pump arranged to circulate cooling medium in the cooling circuit, and at least one cooling element adapted to cool at least one tank of the hydrogen refilling station. The heat recovery system is configured to remove heat from the at least one tank and optionally other hydrogen refuelling station components, and is configured to provide heat to one or more hydrogen refuelling station components that require heating. The heat recovery system and associated processes are controlled by a control unit.

Such a heat recovery system allows waste heat from cooling of the hydrogen gas to be utilized in other processes and components of the hydrogen refuelling station, such as in electrolyser units and/or thermal hydrogen compressors. The at least one tank of the hydrogen refilling station cooled by the heated recovery system may be a fill tank and/or a first pressure storage tank.

The invention further concerns a hydrogen refuelling station comprising such a heat recovery system as described above, and optionally at least one thermal hydrogen compressor. Further objects, advantages and novel features of the present invention will become apparent to one skilled in the art from the following detailed description.

### BRIEF DESCRIPTION OF THE DRAWINGS

For a fuller understanding of the present invention and further objects and advantages of it, the detailed description set out below should be read together with the accompanying drawings, in which the same reference notations denote similar items in the various diagrams, and in which:
- Fig 1: schematically illustrates a hydrogen refuelling station according to not claimed embodiment.
- Fig 2: schematically illustrates a hydrogen refuelling station according to another not claimed embodiment.
- Fig 3: is a flowchart illustrating a method of fuelling a vehicle fuel tank with hydrogen gas from a hydrogen refuelling station.
- Fig 4: schematically illustrates a hydrogen refuelling station adapted for sequential filling.
- Fig 5: schematically illustrates a hydrogen refuelling station comprising a tank cooling system.

### DETAILED DESCRIPTION

The present invention is based on the realisation by the inventor that the cooling and control systems in known hydrogen refuelling stations add considerable complexity and expense to such stations. This insight lead to the design of a station utilizing a discrete small fill tank for the filling of each vehicle fuel tank. By utilizing such a fill tank and having it filled only to the pressure required in order to fill the vehicle fuel tank to a predetermined pressure, the complexity of the fuelling station control system is reduced, as is the need for "on the fly" cooling during filling of the vehicle fuel tank. By "on the fly" cooling it is meant cooling that is performed contemporaneously with filling. The reduced complexity and reduced need for "on the fly" cooling result in a hydrogen refuelling station that may be considerably cheaper in construction and operation.

The hydrogen refuelling station comprises a source of hydrogen gas, a first pressure hydrogen storage tank, a fill tank, a control unit, and a dispensing system. One or more compressors is required to compress the hydrogen from the source to the pressure required in the first pressure storage tank.

In the hydrogen refuelling station according to the invention, the first pressure storage tank and the fill tank cooperate to ensure that the fill tank is filled only to a pressure required for filling a vehicle fuel tank to a predetermined pressure. Information regarding a fuel requirement of the vehicle fuel tank may be communicated to the control unit of the hydrogen refilling station. Based upon this information, the fill pressure of the fill tank may be adapted to a pressure required for filling a vehicle fuel tank to a predetermined pressure. This may be done by partially filling the fill tank from the first pressure storage tank, or by partially venting a pre-filled fill tank to the first pressure storage tank. Naturally, these approaches may be combined, such that the optimal fill pressure in the fill tank may be achieved by a combination of controlled filling from a first storage tank and controlled venting to a second storage tank.

Controlled partial filling of the fill tank may be performed either by venting hydrogen from the first pressure storage tank to the fill tank if the pressure in the first pressure storage tank is sufficiently high, e.g. if the first pressure storage tank is a high pressure storage tank, or by filling the fill tank from the first pressure storage tank via a compressor if the first pressure storage tank operates at a relatively low pressure, e.g. if the first pressure storage tank is an intermediate pressure storage tank.

Controlled partial venting of the fill tank requires that the first pressure storage tank operates at a pressure lower than the pressure rating of the fill tank. Since the fill tank is intended for refuelling at high pressure, this means that the first pressure storage tank may operate at any lower pressure, such as intermediate pressure or medium pressure, as herein defined.

According to prevailing standards, including SAE J2601, hydrogen vehicles typically have a fuel tank rated at one of two nominal working pressures: 350 Bar (35 MPa) or 700 Bar (70 MPa). Light duty vehicles such as passenger cars typically utilize 700 Bar fuel tanks, whereas commercial vehicles such as busses typically utilize 350 Bar fuel tanks. The pressure required in the fill tank and optionally a high pressure storage tank should be in excess of 700 Bar in order to allow the filling of fuel tanks to 700 Bar without requiring simultaneous compression. Suitable pressures for the fill tank and optionally a high pressure storage tank are therefore 700 Bar or higher, such as from about 700 Bar to about 1000 Bar, such as from 800 Bar to 1000 Bar, or about 900 Bar.

The source of hydrogen gas may be any source commonly known in the art. This includes, but is not limited to, pre-filled hydrogen gas cannisters, pre-filled dewars filled with liquid hydrogen, hydrogen gas pipeline systems, steam reformers, and electrolysers. The source of hydrogen gas is preferably one or more electrolyser units, as these are discrete, commercially-available units that allow carbon-neutral on-site production of hydrogen, provided that the electricity required comes from a renewable source. The electrolyser may utilize any suitable technologies, including PEM, alkaline and/or solid oxide electrolysis. The pressure of the hydrogen gas from the source varies depending on the nature of the source. Hydrogen from electrolysis typically produces hydrogen at about 1 - 50 Bar pressure, although increased pressure electrolysis units capable of producing hydrogen at pressure of up to about 200 Bar are known.

One or more compressors are used to compress the hydrogen from the source to the pressure required in the first pressure storage tank. The compressors may be of any sort known in the art. The hydrogen refuelling station may advantageously comprise one or more thermal hydrogen compressors. Thermal hydrogen compressors utilize solid metal hydrides to compress hydrogen and typically have no moving parts. Low-grade heat, such as that from a heat recovery system, may be used to drive thermal hydrogen compressors. Thermal hydrogen compressors suitable for use in refuelling stations are commercially available.

The hydrogen refuelling station may beneficially further comprise a number of storage tanks having a pressure intermediate that of the source and the first pressure storage tank, or higher than that of the first pressure storage tank. For example, the refuelling station may optionally comprise any of a low pressure storage tank preferably arranged to store hydrogen gas at a pressure of from 1 to 100 Bar, a medium pressure storage tank preferably arranged to store hydrogen gas at a pressure of from 200 to 300 Bar, an intermediate pressure storage tank preferably arranged to store hydrogen gas at a pressure of from 400 to 600 Bar, and/or a high pressure storage tank preferably arranged to store hydrogen gas at a pressure of 700 Bar or higher, such as from about 700 Bar to about 1000 Bar, such as from 800 Bar to 1000 Bar, or about 900 Bar. Such tanks may be used in the sequential compression of hydrogen from the source pressure to the final high pressure required in the fill tank. For example, hydrogen may be compressed from the pressure prevailing in the low pressure storage tank to the pressure prevailing in the medium pressure storage tank using a first compressor. The hydrogen may then be compressed from the pressure prevailing in the medium pressure storage tank to the pressure prevailing in the intermediate pressure storage tank using a second compressor. Finally, the hydrogen may be compressed from the pressure prevailing in the intermediate pressure storage tank to the pressure prevailing in the fill tank and optional high pressure storage tank using a third compressor. Alternatively, a single compressor may provide for the compression between tanks by using an appropriate system of valves between tanks.

The first pressure storage tank is adapted to receive hydrogen gas from the one or more compressors and to provide and/or receive hydrogen gas to the fill tank. If the first pressure storage tank is a high pressure storage tank it may controllably provide the fill tank with a determined quantity of hydrogen gas by venting to the fill tank. If the first pressure storage tank is an intermediate pressure storage tank it may controllably provide the fill tank with a determined quantity of hydrogen gas via a compressor, or it may controllably receive a determined quantity of hydrogen gas from the fill tank by venting from the fill tank.

The fill tank is adapted to receive hydrogen gas from the first pressure storage tank or optional high pressure storage tank. The fill tank is adapted to provide hydrogen gas to the dispensing system and optionally to the first pressure storage tank. The fill tank has a smaller internal volume than the first pressure storage tank. For example, the fill tank may have an internal volume that is less than 80% of the internal volume of the first pressure storage tank, such as less than 60% of the internal volume of the first pressure storage tank, or less than 40% of the internal volume of the first pressure storage tank.

The dispensing system is adapted to receive hydrogen gas from the fill tank and to fill the vehicle fuel tank with hydrogen gas to the predetermined fill pressure. If the hydrogen refuelling station is arraned to provide sequential filling, the dispensing system may also be adapted to receive hydrogen from the medium and/or intermediate pressure storage tanks. The dispensing system comprises components required to connect the refuelling station to the vehicle fuel tank inlet. Such components may include for example a hose and nozzle. The dispensing system may comprise further components such as control valves, mass flow meters and inlet lines.

The control unit may be adapted to receive information regarding a fuel requirement of a vehicle fuel tank. Preferably, the control unit may be adapted to receive this information prior to the arrival of the vehicle at the hydrogen refuelling station, for example using long-range wireless means as described below. Using this information, the control unit determines a suitable quantity of hydrogen gas to be contained in the fill tank. The quantity of hydrogen contained in the fill tank is sufficient to fill the vehicle fuel tank to a predetermined pressure, whilst reducing or minimizing the risk that the vehicle fuel tank will be filled above a maximum permissible pressure. The control unit may then control the adaption of the fill quantity of the fill tank to the suitable quantity, by filling and/or venting the fill tank as required from the relevant storage tanks of the hydrogen refuelling station.

The control unit may optionally be adapted to receive or schedule a time window in which the filling of the vehicle fuel tank is to be performed. In such a case, the control unit may suitably control the timing and rate of the transfer of hydrogen to or from the fill tank. Such a procedure can be used to lessen or minimize the heating of hydrogen upon transferring between tanks. Once the fill tank has been supplied with an appropriate quantity of hydrogen and the control unit determines that the vehicle fuel tank is fluidly connected to the dispensing system, the control unit may control the filling of the vehicle fuel tank via the dispensing system.

The control unit may be arranged in any suitable location in the hydrogen refuelling station, such as integrated within the dispensing system. The control unit may be a single physical unit, or the functions of the control unit may be distributed across multiple physical or virtual components, some of which may not necessarily be located in physical association with the hydrogen refuelling station. For example, some of the processing and storage functions of the control unit may be performed entirely or in part within "the cloud".

The control unit may be adapted to communicate with and control further components of the hydrogen refuelling station besides the dispensing system, fill tank and high pressure storage tank. For example, the control unit may be adapted to communicate with and control the source of hydrogen gas, the compressors, any further storage tanks of the hydrogen refuelling station, and any sensors such as pressure, temperature and flow sensors in the hydrogen refuelling station.

The control unit may be adapted to receive information by any communication means known in the art. For example, SAE standard J2799 specifies an IR communications standard between hydrogen vehicles and hydrogen refuelling stations. The control unit may alternatively be arranged to communicate using long-range wireless means such as mobile, eg. 4G, 5G - nG, or wifi, e.g. IEEE 802.11 standard means. The information regarding a fuel requirement may be automatically communicated by a hydrogen vehicle, e.g. through inbuilt communication means, or it may require manual intervention by a user of the vehicle. For example, a user may communicate a fuel requirement by manually imputing a current vehicle fuel level, e.g. ¼, ½ or ¾ tank, in a computer program such as a mobile app.

Each tank in the hydrogen refuelling station may independently be constructed of any suitable material known in the art. For example all-metal tanks (Type I), metal hoop-wrapped composite tanks (Type II), metal-lined composite tanks (Type III), plastic-lined composite tanks (Type IV), or all-composite linerless tanks (Type V) may be used where appropriate. Although the singular term "tank" is used throughout this application, it is noted that each tank may in fact comprise a plurality of individual tanks, i.e. a tank battery. With regard to the fill tank, the hydrogen refuelling station may comprise a number of individual fill tanks, each intended to be filled with a hydrogen quantity sufficient for a specific intended vehicle. In this manner, a specific vehicle may "reserve" a quantity of hydrogen from the hydrogen filling station, the reserved quantity being transferred to a specific fill tank in preparation for filling the specific vehicle upon arrival at the refuelling station.

Control valves, such as solenoid valves or ball valves, may be suitably arranged within the lines of the hydrogen refuelling station in order to control the flow of hydrogen gas between tanks and/or to the distribution system.

If the hydrogen refuelling station comprises medium and/or intermediate pressure storage tanks, these tanks may be adapted to provide hydrogen gas to the dispensing system. This allows the vehicle fuel tank to be sequentially filled from the hydrogen fuelling station, as will be described hereafter.

The Joule-Thomson effect dictates that hydrogen gas warms when expanded at constant enthalpy at the temperatures prevailing in the hydrogen refuelling station. Therefore, in order to avoid overheating when transferring hydrogen between tanks and filling vehicle fuel tanks, the hydrogen gas must be cooled. This is typically performed by cooling during compression, together with "on the fly" cooling performed by a heat exchanger in conjunction with the dispensing system. However, it has been found that cooling may effectively be performed by cooling at least one tank of the hydrogen refuelling station, such as the fill tank and/or one or more of the storage tanks. This holds even for hydrogen refuelling stations that do not comprise a fill tank according to the invention, meaning that even prior art refuelling stations may be cooled in such a manner. Such a manner of cooling is especially advantageous in locations where abundant low-grade cooling is available, such as in cold climate zones.

The fill tank and/or storage tanks may be cooled by arranging a heat recovery system in conjunction with these tanks. The cooling system may for example be a heat recovery system. The heat recovered from such cooling may be used to heat other processes and components associated with the hydrogen refuelling station that require heating. Such components include electrolyser units, and/or thermal hydrogen compressors. Suitable cooling systems may be readily implemented by the skilled person.

The hydrogen refuelling station described herein may be used in a method of fuelling a vehicle fuel tank. Note that there are no claims directed to such methods in the appended set of claims. The method comprises the following steps:
a) receiving information regarding a fuel requirement of the vehicle fuel tank;
b) transferring a quantity of hydrogen gas between the first pressure storage tank and the fill tank ) in order to obtain an appropriate quantity of hydrogen gas in the fill tank, wherein the appropriate quantity is based upon the information received in step a) and is sufficient to fill the vehicle fuel tank to a predetermined fill pressure;
c) arranging the fill tank in fluid communication with the vehicle fuel tank via the dispensing system in order to fill the vehicle fuel tank to a predetermined fill pressure.

In step a) the hydrogen refuelling station receives information regarding a fuel requirement. Preferably, this information is received prior to the arrival of the vehicle at the hydrogen refuelling station, such as at least about half an hour prior to the arrival of the vehicle. This allows the hydrogen refuelling station adequate time to perform the methods described herein in an efficient manner. As described above, this information may be communicated autonomously by a vehicle, or it may require intervention by a user to input and send the required information. The information required includes at least an indication of a quantity of hydrogen required to obtain a predetermined fill pressure in the vehicle. This quantity may be communicated as for example a current pressure in the fuel tank, together with information regarding the total volume of the fuel tank, or as a mass of hydrogen required to obtain the predetermined pressure. The information communicated may also include a time slot for fuelling the vehicle. For instance, the refuelling station control system and user interface may together provide for scheduling of fuelling in order to ensure that the fuelling station is available and able to provide a sufficient quantity of fuel at the scheduled time.

If the vehicle is in close temporal and distal proximity to the refuelling, such as communing via IR communication with the dispensing system nozzle, then the current fuel quantity tallies well with the required fuel quantity. However, if the vehicle is some distance away from the refuelling station, or if refuelling is scheduled for a determined time in the non-immediate future, the current vehicle fuel quantity may change considerably prior to refuelling. In such a case, the user application or refuelling station control unit may compensate for this by using for example geodata or fuel consumption data in order to predict and account for an increased fuelling requirement when the actual refuelling occurs.

In step b) a quantity of hydrogen gas is transferred between the first pressure storage tank and the fill tank ) in order to obtain an appropriate quantity of hydrogen gas in the fill tank. The appropriate quantity of hydrogen in the fill tank is sufficient to fill the vehicle fuel tank to a predetermined fill pressure and is based upon the information received in step a). The predetermined fill pressure may for example be a 95% state of charge (SOC). The appropriate quantity may be a quantity sufficient to ensure that the predetermined fill pressure is reached, whilst reducing or minimizing the risk of the maximum fuel tank pressure being exceeded during filling. If the vehicle fuel tank is to be filled only from the fill tank, then the sufficient quantity should be sufficient by itself to fill the vehicle fuel tank to the predetermined pressure. However, if the hydrogen refuelling station implements sequential filling, then the sufficient quantity should be sufficient to top-up the vehicle fuel tank to the predetermined pressure after sequential filling from the medium and/or intermediate pressure storage tanks.

Note that transfer of hydrogen between tanks does not denote any specific directionality, and the hydrogen may be transferred from the first pressure storage tank to the fill tank or vice-versa where applicable. For example, the fill tank may be filled by the first pressure storage tank to an appropriate quantity subsequent to receiving information regarding a fuel requirement of the vehicle fuel tank in step a). This may be done by venting from a high pressure storage tank to the fill tank, or by compressing the hydrogen from an intermediate pressure storage tank to the fill tank. Alternatively, the fill tank may be fully filled prior to receiving information regarding a fuel requirement of the vehicle fuel tank in step a). This allows ample time for pre-cooling of the hydrogen in the fill tank, as described below. Upon receiving information regarding a fuel requirement of the vehicle fuel tank in step a), the fill tank may be vented to contain an appropriate quantity by releasing hydrogen to an intermediate pressure storage tank or medium pressure storage tank. Procedures combining controlled filling and venting of the fiull tank are also possible. For example, upon receiving information regarding a fuel requirement of the vehicle fuel tank in step a), the fill tank may be filled to an appropriate quantity based upon the current fuel pressure in the vehicle fuel tank. Once the vehicle fuel tank docks with the hydrogen filling station in step c) the information regarding a fuel requirement of the vehicle fuel tank may be updated, and a quantity of hydrogen may be vented from the fill tank to an intermediate pressure storage tank prior to or simultaneous with filling of the vehicle fuel tank.

In step c) the fill tank is arranged in fluid communication with the vehicle fuel tank via the dispensing system in order to fill the vehicle fuel tank to a predetermined fill pressure. If sequential filling is utilized, the vehicle fuel tank is first filled from the medium pressure storage tank, then the intermediate pressure storage tank prior to filling from the fill tank. Because the fill tank is filled only with a hydrogen quantity sufficient to reach a predetermined fill pressure in the vehicle fuel tank without exceeding a maximum pressure in the fuel tank, the pressure difference between the fill tank and the vehicle fuel tank will be relatively low, especially if sequential filling is utilized. This means that the transfer of hydrogen from the fill tank to the vehicle fuel tank will be easier to control, since the rate of mass flow from the fill tank to the fuel tank will be lower. It also means that less heat will be evolved by the Joule-Thomson effect and the requirement for cooling will be lessened.

If a cooling system is arranged to cool the fill tank and optionally the medium, intermediate and high pressure storage tanks, the method may further comprise a step of cooling the fill tank and optionally one or more of the medium, intermediate and high pressure storage tanks. The fill tank may be pre-cooled prior to step b) of transferring hydrogen to/from the fill tank, for example to pre-cool a pre-filled fill tank prior to venting in step b), or it may be cooled after step b). The cooling of the fill tank may be timed in accordance with the information received from a vehicle in order to ensure that adequately cooled hydrogen is available at the instance of refuelling, whilst avoiding wasting energy by cooling for excessively long periods.

The methods described herein may be performed by a first computer program. The first computer program may comprise routines for a) receiving information regarding a fuel requirement of a vehicle fuel tank; b) transferring a quantity of hydrogen gas between the first pressure gas storage tank and the fill tank in order to obtain an appropriate quantity of hydrogen gas in the fill tank; and c) arranging the fill tank in fluid communication with the vehicle fuel tank via the dispensing system. The first computer program may further comprise routines for calculating the appropriate quantity of hydrogen gas in step b), and/or the quantity of hydrogen to be transferred between tanks. The first computer program may be stored in an executable form or in a compressed form in a memory, such as a read/write memory or read-only memory. The control unit of the hydrogen refuelling station or a computer connected to the control unit may be adapted to run the first computer program, thereby executing the methods described herein. The computer program may be stored and executed in part or in its entirety remotely, such as within "the cloud".

A vehicle or user may possess a corresponding second computer program comprising routines for communicating information regarding a fuel requirement of a vehicle fuel tank. Such routines may comprise routines for communicating a quantity of hydrogen required to reach the predetermined fill pressure in the vehicle fuel tank, and routines for communicating a time window for the refuelling of the vehicle fuel tank to be performed. The second computer program may be stored in an executable form or in a compressed form in a memory, such as a read/write memory or read-only memory. The second computer program may be an app stored upon a user mobile device or stored upon a vehicle control unit. Running the second computer program may execute the routines described herein.

The invention will now be further illustrated with reference to the appended figures.

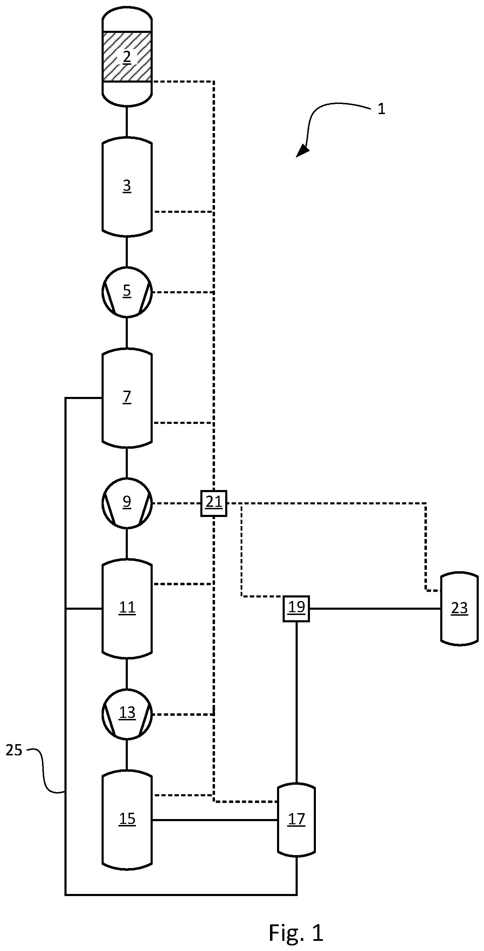

Figure 1 schematically illustrates a hydrogen refuelling station according to a non-claimed embodiment, refuelling a vehicle fuel tank 23. Solid lines indicate a fluid connection enabling a flow of hydrogen between components. Dashed lines indicate a data link allowing the flow of signals between components. The hydrogen refuelling station may comprise further components not illustrated, including but not limited to valves, pressure gauges and flow meters. The data links may be physical links, e.g. by a cable, or they may be wireless links. The refuelling station 1 comprises an electrolyser 2, a low pressure storage tank 3, a medium pressure storage tank 7, an intermediate pressure storage tank 11 and a high pressure storage tank 15. A first compressor 5 is arranged to compress hydrogen from the low pressure storage tank 3 to the medium pressure storage tank 7. A second compressor 9 is arranged to compress hydrogen from the medium pressure storage tank 7 to the intermediate pressure storage tank 11. A third compressor 13 is arranged to compress hydrogen from the intermediate pressure storage tank 11 to the medium pressure storage tank 15. The high pressure storage tank 15 is fluidly connected to a fill tank 17 that has a smaller internal volume than the high pressure storage tank 15. The fill tank 17 is in turn fluidly connected to a dispensing system 19. A control unit 21 is arranged to send, receive and process signals from each of the components. An optional return line 25 connects the fill tank to the intermediate pressure storage tank 11 or medium pressure storage tank 7, in order to allow the fill quantity of hydrogen in the fill tank 17 to be controlled by venting to the intermediate pressure storage tank 11 or medium pressure storage tank 7.

The hydrogen refuelling station 1 is fluidly coupled to a vehicle fuel tank 23 via a hose and nozzle (not illustrated) of the dispensing system 19. A data link (illustrated) between the vehicle fuel tank 23 and control unit 21 of the hydrogen refuelling station 1 may also optionally be established. Hydrogen is provided from the fill tank 17 to the vehicle fuel tank 23 via the dispensing system 19.

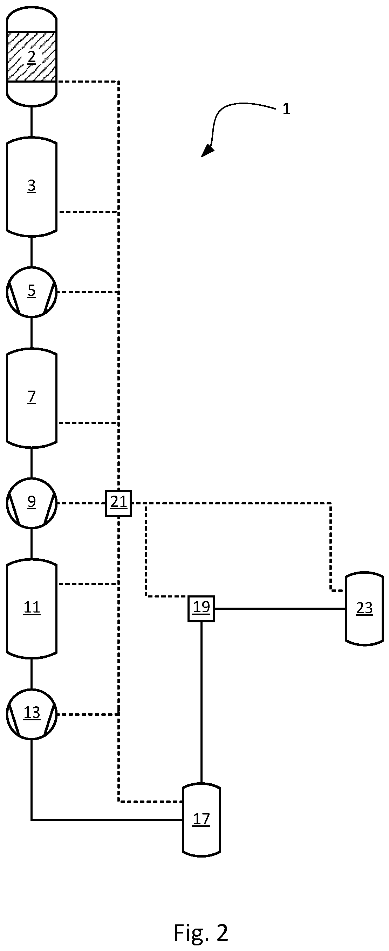

Figure 2 schematically illustrates a non-claimed embodiment of a hydrogen refuelling station similar to that of Figure 1, but lacking a high pressure storage tank 15. Instead, the fill tank 17 is filled directly by compressor 13 from intermediate pressure storage tank 11. The fill tank 17 may optionally be vented to the intermediate pressure storage tank 11, either via the compressor 13 or via a separate return line (not shown).

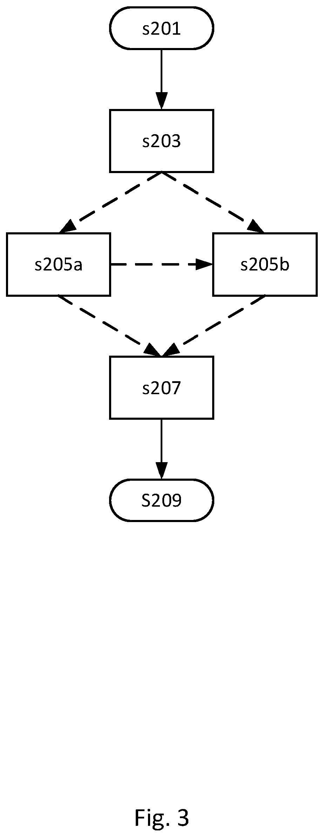

Figure 3 is a flowchart illustrating a non-claimed method of fuelling a vehicle fuel tank according to the invention. Step s201 denotes the start of the method. In a first step s203, the hydrogen refuelling station 1 receives information regarding a fuel requirement of the vehicle fuel tank 23.In subsequent steps s205a and s205b a quantity of hydrogen is transferred between the first pressure storage tank and the fill tank. In step s205a a quantity of hydrogen gas is transferred from the high pressure gas storage tank 15 or intermediate pressure storage tank 11 to the fill tank 17 in order to obtain an appropriate quantity of hydrogen gas in the fill tank, wherein the appropriate volume is based upon the information received in step s203 and is sufficient to fill the vehicle fuel tank 23 to a predetermined fill pressure. In step s205b a quantity of hydrogen gas is transferred from the fill tank 17 to the intermediate pressure storage tank 11 or medium pressure storage tank 7 in order to obtain an appropriate quantity of hydrogen gas in the fill tank, wherein the appropriate volume is based upon the information received in step s203 and is sufficient to fill the vehicle fuel tank 23 to a predetermined fill pressure. At least one of steps s205a or s205b must be performed, and both may be performed, although not necessarily concurrently. In a following step s207 the fill tank 17 is arranged in fluid communication with the vehicle fuel tank 23 via the dispensing system 19 in order to fill the vehicle fuel tank 23 to the predetermined fill pressure. Step s209 denotes the end of the method. Where a step is termed as "subsequent" or "following", this does not necessitate that the step immediately follows the preceding recited step, i.e. further intermediate steps may be performed between the recited steps.

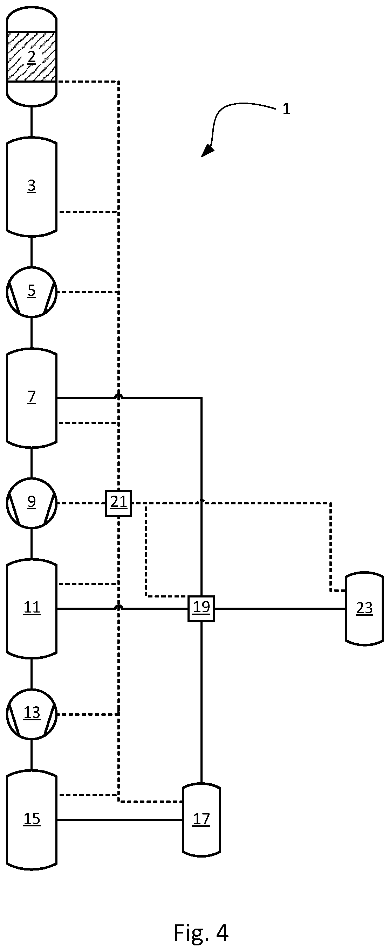

Figure 4 schematically illustrates a non-claimed embodiment of a hydrogen refuelling station 1 that may utilize sequential filling. The hydrogen refuelling station 1 illustrated is similar to that of Figure 1. However, the medium pressure storage tank 7 and intermediate pressure storage tank 11 are also fluidly connected to the dispensing system 19, meaning that the vehicle fuel tank 23 may be sequentially filled from the medium pressure storage tank 7, followed by the intermediate pressure storage tank 11 and finally the fill tank 17.

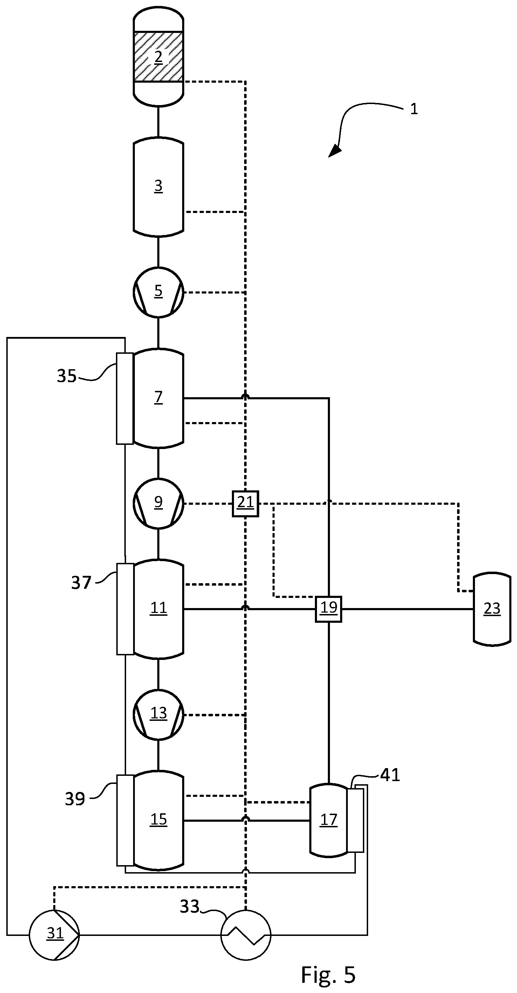

Figure 5 schematically illustrates a hydrogen refuelling station 1 having a tank cooling system. The hydrogen refuelling station 1 illustrated is similar to that of Figure 4. The tank cooling system comprises a pump 31, a heat exchanger 33 and tank cooling elements 35, 37, 39, and 41. A cooling medium circulates in the cooling system removing heat from the tanks 7, 11, 15 and 17. Although the system illustrates the heating elements 35, 37, 39, and 41 as being series coupled, they may also be coupled in parallel or in series/parallel combinations. The waste heat from the hydrogen refuelling station may be removed through heat exchanger 33 and discarded in a manner similar to that known in the art. Alternatively, the collected heat from the cooling process may be recovered and used in the hydrogen refulling station where needed, e.g. for heating an electrolyzer room or thermal hydrogen compressor, or in other processes associated with the hydrogen refuelling station. This energy transfer may also be controlled by the control system 21 and balanced to different needs as appropriate.

## Claims

1. A hydrogen refuelling station (1) comprising:
a source (2) of hydrogen gas arranged to provide hydrogen gas at a source pressure;
a first pressure storage tank arranged to store hydrogen gas at a first pressure;
one or more compressors (5, 9, 13) adapted to compress and convey the hydrogen gas from the source (2) of hydrogen gas at source pressure to the first pressure storage tank;
a control unit (21); and
a dispensing system (19) adapted to dispense the hydrogen gas to a vehicle fuel tank (23);
**characterised in that** the hydrogen refuelling station (1) further comprises a fill tank (17);
wherein the fill tank has an internal volume smaller than an internal volume of the first pressure storage tank, is adapted to be arranged in fluid communication with the first pressure storage tank, and is adapted to provide the dispensing system (19) with hydrogen gas; and
wherein the hydrogen refuelling station further comprises a tank cooling system arranged to cool the fill tank (17).

2. A hydrogen refuelling station according to claim 1, wherein the first pressure storage tank is a high pressure storage tank (15), an intermediate pressure storage tank (11), or a medium pressure storage tank (7).

3. A hydrogen refuelling station according to any one of the preceding claims, wherein the tank cooling system is further arranged to cool one or more of the low pressure storage tank (3), the medium pressure storage tank (7), the intermediate pressure storage tank (11), and the high pressure storage tank (15).

4. A hydrogen refuelling station according to any one of the preceding claims, wherein the first pressure storage tank is an intermediate pressure tank (11), and wherein a compressor is used to transfer hydrogen gas from the intermediate pressure tank (11) to the fill tank (17).

5. A hydrogen refuelling station according to any one of the preceding claims, wherein the source (2) of hydrogen gas is an electrolyser, a reformer, a filled cryogenic hydrogen container, or a filled gaseous hydrogen container, preferably an electrolyser.

6. A hydrogen refuelling station according to any one of the preceding claims, further comprising a low pressure storage tank (3) preferably arranged to store hydrogen gas at a pressure of from 1 to 100 Bar, and/or a medium pressure storage tank (7) preferably arranged to store hydrogen gas at a pressure of from 200 to 300 Bar, and/or an intermediate pressure storage tank (11) preferably arranged to store hydrogen gas at a pressure of from 400 to 600 Bar, and/or a high pressure storage tank (15) preferably arranged to store hydrogen gas at a pressure of 700 Bar or higher, such as from 700 to 1000 Bar.

7. A hydrogen refuelling station according to claim 6, wherein the medium pressure storage tank (7) and/or the intermediate pressure storage tank (11) are adapted to provide the dispensing system (19) with hydrogen gas.

8. A hydrogen refuelling station according to any one of the preceding claims, comprising a single compressor or multiple compressors (5, 9, 13), wherein the single compressor or multiple compressors is/are adapted to sequentially compress and convey the hydrogen gas from the source (2) of hydrogen gas at source pressure to the first pressure storage tank, optionally via one or more of the low pressure storage tank (3), the medium pressure storage tank (7) and the intermediate pressure storage tank (11).

9. A hydrogen refuelling station according to claim 1, comprising a heat recovery system, the heat recovery system comprising a cooling circuit, the cooling circuit comprising a cooling medium arranged to be circulated in the cooling circuit, a pump arranged to circulate cooling medium in the cooling circuit, and at least one cooling element adapted to cool at least one tank of the hydrogen refilling station, wherein the heat recovery system is configured to remove heat from the at least one tank and optionally other hydrogen refuelling station components, and is configured to provide heat to one or more hydrogen refuelling station components that require heating, wherein the heat recovery system and associated processes are controlled by a control unit.

10. A hydrogen refuelling station according to claim 9, wherein the at least one tank is the fill tank and/or the first pressure storage tank of the hydrogen refilling station.

11. A hydrogen refuelling station according to any one of claims 9-10, wherein the one or more hydrogen refuelling station components that require heating are an electrolyser unit and/or a thermal hydrogen compressor.

## Patentansprüche

1. Wasserstoffbetankungsstation (1), umfassend:
eine Quelle (2) von Wasserstoffgas, die angeordnet ist, um Wasserstoffgas mit einem Quelldruck bereitzustellen;
einen ersten Drucklagertank, der angeordnet ist, um Wasserstoffgas mit einem ersten Druck zu lagern;
einen oder mehrere Kompressoren (5, 9, 13), die dazu ausgelegt sind, das Wasserstoffgas von der Quelle (2) von Wasserstoffgas bei Quelldruck zu komprimieren und zu dem ersten Drucklagertank zu transportieren;
eine Steuereinheit (21); und
eine Dosieranlage (19), die dazu ausgelegt ist, das Wasserstoffgas zu einem Treibstofftank (23) eines Fahrzeugs zu dosieren;
**dadurch gekennzeichnet, dass** die Wasserstoffbetankungsstation (1) ferner einen Fülltank (17) umfasst;
wobei der Fülltank ein internes Volumen aufweist, das kleiner ist als ein internes Volumen des ersten Drucklagertanks, dazu ausgelegt ist, in Fluidkommunikation mit dem ersten Drucklagertank angeordnet zu werden, und dazu ausgelegt ist, das Wasserstoffgas für die Dosieranlage (19) bereitzustellen; und
wobei die Wasserstoffbetankungsstation ferner ein Tankkühlsystem umfasst, das dazu angeordnet ist, den Fülltank (17) zu kühlen.

2. Wasserstoffbetankungsstation nach Anspruch 1, wobei der erste Drucklagertank ein Hochdrucklagertank (15), ein Zwischendrucklagertank (11) oder ein Mitteldrucklagertank (7) ist.

3. Wasserstoffbetankungsstation nach einem der vorhergehenden Ansprüche, wobei das Tankkühlsystem ferner dazu angeordnet ist, einen oder mehrere des Niederdrucklagertanks (3), des Mitteldrucklagertanks (7), des Zwischendrucklagertanks (11) und des Hochdrucklagertanks (15) zu kühlen.

4. Wasserstoffbetankungsstation nach einem der vorhergehenden Ansprüche, wobei der erste Drucklagertank ein Zwischendrucktank (11) ist und wobei ein Kompressor verwendet wird, um Wasserstoffgas von dem Zwischendrucktank (11) zu dem Fülltank (17) zu übertragen.

5. Wasserstoffbetankungsstation nach einem der vorhergehenden Ansprüche, wobei die Quelle (2) von Wasserstoffgas ein Elektrolyseur, ein Reformer, ein mit kryogenem Wasserstoff gefüllter Behälter oder ein mit gasförmigem Wasserstoff gefüllter Behälter, vorzugsweise ein Elektrolyseur ist.

6. Wasserstoffbetankungsstation nach einem der vorhergehenden Ansprüche, ferner umfassend einen Niederdrucklagertank (3), der vorzugsweise dazu angeordnet ist, Wasserstoffgas bei einem Druck von 1 bis 100 bar zu lagern, und/oder einen Mitteldrucklagertank (7), der vorzugsweise dazu angeordnet ist, Wasserstoffgas bei einem Druck von 200 bis 300 bar zu lagern, und/oder einen Zwischendrucklagertank (11), der vorzugsweise dazu angeordnet ist, Wasserstoffgas bei einem Druck von 400 bis 600 bar zu lagern, und/oder einen Hochdrucklagertank (15), der vorzugsweise dazu angeordnet ist, Wasserstoffgas bei einem Druck von 700 bar oder mehr zu lagern, zum Beispiel von 700 bis 1000 bar.

7. Wasserstoffbetankungsstation nach Anspruch 6, wobei der Mitteldrucklagertank (7) und/oder der Zwischendrucklagertank (11) dazu ausgelegt sind, das Wasserstoffgas für die Dosieranlage (19) bereitzustellen.

8. Wasserstoffbetankungsstation nach einem der vorhergehenden Ansprüche, umfassend einen einzelnen Kompressor oder mehrere Kompressoren (5, 9, 13), wobei der einzelne Kompressor oder die mehreren Kompressoren dazu ausgelegt ist/sind, das Wasserstoffgas von der Quelle (2) von Wasserstoffgas bei Quelldruck nacheinander zu komprimieren und zu dem ersten Drucklagertank zu transportieren, optional über einen oder mehrere von dem Niederdrucklagertank (3), dem Mitteldrucklagertank (7) und dem Zwischendrucklagertank (11).

9. Wasserstoffbetankungsstation nach Anspruch 1, umfassend ein Wärmerückgewinnungssystem, wobei das Wärmerückgewinnungssystem einen Kühlkreislauf umfasst, wobei der Kühlkreislauf Folgendes umfasst: ein Kühlmedium, das dazu angeordnet ist, in dem Kühlkreislauf zirkuliert zu werden, eine Pumpe, die dazu angeordnet ist, ein Kühlmedium in dem Kühlkreislauf zu zirkulieren, und mindestens ein Kühlelement, das dazu ausgelegt ist, mindestens einen Tank der Wasserstoffbetankungsstation zu kühlen, wobei das Wärmerückgewinnungssystem dazu konfiguriert ist, Wärme aus dem mindestens einen Tank und optional aus anderen Komponenten der Wasserstoffbetankungsstation zu entfernen, und dazu konfiguriert ist, Wärme für eine oder mehrere Komponenten der Wasserstoffbetankungsstation, die Erwärmen benötigen, bereitzustellen, wobei das Wärmerückgewinnungssystem und verbundene Prozesse von einer Steuerungseinheit gesteuert werden.

10. Wasserstoffbetankungsstation nach Anspruch 9, wobei der mindestens eine Tank der Fülltank und/oder der erste Drucklagertank der Wasserstoffbetankungsstation ist.

11. Wasserstoffbetankungsstation nach einem der Ansprüche 9-10, wobei die eine oder mehreren Komponenten der Wasserstoffbetankungsstation, die Erwärmen benötigen, eine Elektrolyseureinheit und/oder ein thermischer Wasserstoffkompressor sind.

## Revendications

1. Station de ravitaillement en hydrogène (1) comprenant :
une source (2) d'hydrogène gazeux agencée pour fournir de l'hydrogène gazeux à une pression source ;
un premier réservoir de stockage sous pression agencé pour stocker de l'hydrogène gazeux à une première pression ;
un ou plusieurs compresseurs (5, 9, 13) agencés pour comprimer et transporter l'hydrogène gazeux de la source (2) d'hydrogène gazeux à la pression source vers le premier réservoir de stockage sous pression ;
une unité de commande (21) ; et
un système de distribution (19) agencé pour distribuer l'hydrogène gazeux vers un réservoir de carburant de véhicule (23) ;
**caractérisée en ce que** la station de ravitaillement en hydrogène (1) comprend en outre un réservoir de remplissage (17) ;
dans laquelle le réservoir de remplissage a un volume interne inférieur à un volume interne du premier réservoir de stockage sous pression, est adapté pour être agencé en communication fluidique avec le premier réservoir de stockage sous pression, et est adapté pour être agencé pour alimenter le système de distribution (19) en hydrogène gazeux ; et
dans laquelle la station de ravitaillement en hydrogène comprend en outre un système de refroidissement de réservoir agencé pour refroidir le réservoir de remplissage (17).

2. Station de ravitaillement en hydrogène selon la revendication 1, dans laquelle le premier réservoir de stockage sous pression est un réservoir de stockage haute pression (15), un réservoir de stockage à pression intermédiaire (11) ou un réservoir de stockage moyenne pression (7).

3. Station de ravitaillement en hydrogène selon l'une quelconque des revendications précédentes, dans laquelle le système de refroidissement de réservoir est en outre agencé pour refroidir un ou plusieurs parmi le réservoir de stockage basse pression (3), le réservoir de stockage moyenne pression (7), le réservoir de stockage à pression intermédiaire (11) et le réservoir de stockage haute pression (15).

4. Station de ravitaillement en hydrogène selon l'une quelconque des revendications précédentes, dans laquelle le premier réservoir de stockage sous pression est un réservoir à pression intermédiaire (11), et dans laquelle un compresseur est utilisé pour transférer l'hydrogène gazeux du réservoir à pression intermédiaire (11) au réservoir de remplissage (17).

5. Station de ravitaillement en hydrogène selon l'une quelconque des revendications précédentes, dans laquelle la source (2) d'hydrogène gazeux est un électrolyseur, un reformeur, un conteneur d'hydrogène cryogénique rempli ou un conteneur d'hydrogène gazeux rempli, de préférence un électrolyseur.

6. Station de ravitaillement en hydrogène selon l'une quelconque des revendications précédentes, comprenant en outre un réservoir de stockage basse pression (3) de préférence agencé pour stocker de l'hydrogène gazeux à une pression de 1 à 100 bars, et/ou un réservoir de stockage moyenne pression (7) de préférence agencé pour stocker de l'hydrogène gazeux à une pression de 200 à 300 bars, et/ou un réservoir de stockage à pression intermédiaire (11) de préférence agencé pour stocker de l'hydrogène gazeux à une pression de 400 à 600 bars, et/ou un réservoir de stockage haute pression (15) de préférence agencé pour stocker de l'hydrogène gazeux à une pression de 700 bars ou plus, telle que 700 à 1000 bars.

7. Station de ravitaillement en hydrogène selon la revendication 6, dans laquelle le réservoir de stockage moyenne pression (7) et/ou le réservoir de stockage à pression intermédiaire (11) sont adaptés pour alimenter le système de distribution (19) en hydrogène gazeux.

8. Station de ravitaillement en hydrogène selon l'une quelconque des revendications précédentes, comprenant un compresseur unique ou des compresseurs multiples (5, 9, 13), dans laquelle le compresseur unique ou les compresseurs multiples sont adaptés pour comprimer et transporter séquentiellement l'hydrogène gazeux de la source (2) d'hydrogène gazeux à la pression de la source vers le premier réservoir de stockage sous pression, éventuellement via un ou plusieurs parmi le réservoir de stockage basse pression (3), le réservoir de stockage moyenne pression (7) et le réservoir de stockage à pression intermédiaire (11).

9. Station de ravitaillement en hydrogène selon la revendication 1, comprenant un système de récupération de chaleur, le système de récupération de chaleur comprenant un circuit de refroidissement, le circuit de refroidissement comprenant un milieu de refroidissement agencé pour circuler dans le circuit de refroidissement, une pompe agencée pour faire circuler le milieu de refroidissement dans le circuit de refroidissement, et au moins un élément de refroidissement adapté pour refroidir au moins un réservoir de la station de ravitaillement en hydrogène, dans laquelle le système de récupération de chaleur est configuré pour éliminer la chaleur de l'au moins un réservoir et éventuellement d'autres composants de la station de ravitaillement en hydrogène, et est configuré pour fournir de la chaleur à un ou plusieurs composants de la station de ravitaillement en hydrogène qui nécessitent un chauffage, dans laquelle le système de récupération de chaleur et les processus associés sont commandés par une unité de commande.

10. Station de ravitaillement en hydrogène selon la revendication 9, dans laquelle l'au moins un réservoir est le réservoir de remplissage et/ou le premier réservoir de stockage sous pression de la station de ravitaillement en hydrogène.

11. Station de ravitaillement en hydrogène selon l'une quelconque des revendications 9 à 10, dans laquelle les un ou plusieurs composants de station de ravitaillement en hydrogène qui nécessitent un chauffage sont une unité d'électrolyseur et/ou un compresseur d'hydrogène thermique.
